# EUROPÄISCHE PATENTSCHRIFT

(11) **EP 3 560 709 B1**
(45) Veröffentlichungstag und Bekanntmachung des Hinweises auf die Patenterteilung: **12.08.2020**
(21) Anmeldenummer: 18169085.0
(22) Anmeldetag: 24.04.2018
(51) Int. Cl.: B32B 37/06, A61F 13/514, B32B 5/02, B32B 27/12, B32B 27/32, B32B 27/20, B32B 37/08, B32B 37/00, B32B 37/20, B29C 55/18, B29C 59/04, B29L 31/48

(54) **VERFAHREN ZUR HERSTELLUNG VON BEDRUCKTEN VLIES-FOLIEN-LAMINATEN**
METHOD FOR THE MANUFACTURE OF PRINTED LAMINATES OF NON-WOVEN FABRICS AND FILM
PROCÉDÉ DE FABRICATION DE STRATIFIÉS IMPRIMÉS DE TISSUS NON TISSÉS ET DE FILM

(43) Veröffentlichungstag der Anmeldung: 30.10.2019
(73) Patentinhaber: RKW SE, 67227 Frankenthal (DE)
(72) Erfinder: BÖRMANN, Ludwig, 83547 Babensham (DE)
(74) Vertreter: Lang, Johannes

(56) Entgegenhaltungen:
- EP-A1- 3 222 406
- WO-A1-2005/113232
- WO-A1-2006/024394
- DE-A1-102013 001 826

## Beschreibung

Die Erfindung betrifft Verfahren zur Herstellung von bedruckten Vlies-Folien-Laminaten, damit hergestellte bedruckte Vlies-Folien-Laminate und ihre Verwendung, insbesondere im Hygienebereich, z.B. in Windeln.

Aus der EP 0 768 168 A1 und der EP 1716 830 A1 sind Verfahren zur Herstellung von im Hygienebereich einsetzbaren Folien bekannt. An solche Hygienefolien werden aufgrund ihres Einsatzbereichs mehrere Anforderungen gestellt. Sie sollen flüssigkeitsdicht sein und über bestimmte haptische Eigenschaften verfügen, wie Weichheit, Geschmeidigkeit, raschelarmes Verhalten und textiler Griff. Folien im Hygienebereich sollen einen weichen, stoffähnlichen Griff besitzen. Insbesondere bei ihrer Verwendung für Inkontinenzprodukte soll die Geräuschentwicklung möglichst gering sein, d.h. die Folien sollen raschelarm sein. In Verbindung mit einem geringen Glanzgrad ergibt dies eine sehr textile Folie, was im Hygienebereich erwünscht ist. Hinzu kommt, dass in den letzten Jahren die in Windeln und Inkontinenzprodukten enthaltenen Saugkörper immer dünner geworden sind, was insbesondere durch die Verwendung von Superabsorber-Polymeren ermöglicht wurde. Diese Superabsorber-Polymere werden in Form grobkörniger Pulver eingesetzt, und die Hygienefolien müssen eine derartige Festigkeit besitzen, dass ein Durchstoßen der Folie durch die einzelnen Körner, z.B. bei Belastung durch Hinsetzen oder sonstige Bewegung des Trägers, mit Sicherheit vermieden wird. Eine Bildung von Löchern (*"Pinholes"*) durch Superabsorber-Polymere und ein Platzen der Fertigfolienprodukte in den Verpackungseinheiten muss vermieden werden. Eine weitere Anforderung an Hygienefolien besteht in einer Mindestzugfestigkeit, die für eine Verarbeitung der Folienbahnen auf den schnell laufenden Maschinen (Konverter) der Hersteller von z.B. Windeln und Damenbinden erforderlich ist. Darüber hinaus sollen Folien für Hygieneanwendungen eine bestimmte Längs- und Querreißfestigkeit aufweisen.

Bekannt sind auch Laminate aus Folie und Vlies, die im Hygienebereich eingesetzt werden. Eine Herstellung derartiger Laminate ist in der WO 2006/024394 A1 beschrieben, bei der eine Ausgangsfolienbahn aus thermoplastischem Polymermaterial zusammen mit einer Ausgangsvliesbahn, deren Schmelzpunkt oberhalb des Kristallitschmelzpunktes des Polymermaterials liegt, auf eine Temperatur über dem Kristallitschmelzpunkt des Polymermaterials und unter dem Schmelzpunkt der Ausgangsvliesbahn erwärmt und das gebildete Laminat durch einen gekühlten Walzenspalt geführt und dabei auf eine Temperatur unterhalb des Kristallitschmelzpunktes der Ausgangfolienbahn gekühlt wird.

In der EP 0 768 168 A1 wird eine Ausgangsfolienbahn aus thermoplastischem Polymermaterial bis zum schmelzeflüssigen Zustand des Polymermaterials erwärmt und danach durch einen gekühlten Walzenspalt geführt. In der EP 1 716 830 A1 wird ein Verfahren mit Erwärmen des Polymermaterials und anschließendes Führen durch einen gekühlten Walzenspalt mit einer Ausgangsfolienbahn durchgeführt, die ein thermoplastisches Polymermaterial mit einer Polyethylen-Matrix enthält, in der 1 bis 70 Gewichtsteile Polypropylen, bezogen auf 100 Gewichtsteile Polyethylen-Matrix enthalten sind. Hierbei wird die Erwärmung der Ausgangsfolienbahn bis zum schmelzeflüssigen Zustand des Polyethylen-Matrixmaterials, jedoch nicht bis zum schmelzeflüssigen Zustand des Polypropylens durchgeführt. Darin beschrieben sind Folien mit geringen Dicken bis zu 15 µm herab, die noch die Anforderungen an Hygienefolien erfüllen. Aus der EP 2 565 013 A1 sind noch dünnere Folien bekannt, die durch ein spezielles Reckverfahren hergestellt werden, indem Folien aus thermoplastischem Polymermaterial, die eine niedrig schmelzende Komponente und eine hoch schmelzende Komponente enthalten, durch Erwärmung in den teilweise geschmolzenen Zustand stark gereckt werden.

In zunehmendem Maße werden Vlies-Folien-Laminate bedruckt. Die WO 2006/024394 A1 beschreibt das Bedrucken der Folien mit Druckfarben, bevor die Folie mit dem Vlies verbunden wird. Solange die Druckfarbe nur zu einem geringen Teil die Folie bedeckt, üblicherweise zu 5 bis 10%, wird dadurch der nach dem Auftrag der Druckfarbe mittels Thermolaminieren hergestellte Verbund zwischen Folie und Vlies nicht beeinträchtigt, da die nicht bedruckten Stellen einen ausreichenden Verbund bereitstellen. Da jedoch die Entwicklung des Marktes in Richtung steigender Druckfarbendeckung bis hin zur vollständigen Bedeckung geht, tritt das Problem zutage, dass an den Stellen, an denen die Folien bedruckt sind, kein Verbund zwischen Folie und Vlies besteht und daher bei höheren Druckfarbendeckungen mit dem bekannten Thermolaminier-Verfahren kein Laminat mehr hergestellt werden kann.

Der Erfindung lag die Aufgabe zugrunde, dieses Problem zu lösen und auch bei hohen Druckfarbendeckungen die Herstellung von Vlies-Folien-Laminaten zu ermöglichen.

Dieses Problem wird dadurch gelöst, dass eine bedruckte Folie aus thermoplastischem Polymermaterial an den bedruckten Stellen mit einem Haftvermittler beschichtet (bedruckt) wird und anschließend zusammen mit einer Vliesbahn in den schmelzeflüssigen Zustand wenigstens einer Polymerkomponente der Folie sowie des Haftvermittlers, welche unterhalb des Kristallitschmelzpunkts des Vlieses liegen, erwärmt wird. Anschließend wird das erhaltene Laminat in einem gekühlten Walzenspalt abgekühlt. Anders als übliche Heißschmelzkleber oder Hotmelts, die im heißen oder geschmolzenen Zustand auf eine Polymerfolie aufgetragen werden, wird der Haftvermittler bei dem erfindungsgemäßen Verfahren bei niedrigeren Temperaturen, vorzugsweise in lösemittel- oder wasserbasierter Form, insbesondere mittels eines Druckwerks, aufgetragen oder in einer Ausführungsform bereits der Druckfarbe zugegeben und zusammen mit der Druckfarbe aufgetragen. Nach dem Auftrag wird der Haftvermittler in seinen schmelzeflüssigen Zustand über das Erwärmen der Folie und des Vlieses überführt, wodurch an den bedruckten Stellen der Verbund zwischen Folie und Vlies hergestellt wird.

Somit betrifft die Erfindung ein Verfahren zur Herstellung eines bedruckten Vlies-Folien-Laminats aus einer Ausgangsfolienbahn aus einem thermoplastischen Polymermaterial und einer Ausgangsvliesbahn, wobei der Schmelzpunkt der Ausgangsvliesbahn oberhalb des Kristallitschmelzpunkts wenigstens einer Komponente des Polymermaterials der Ausgangsfolienbahn liegt,
wobei das Verfahren folgende Schritte umfasst:
zumindest teilweise Beschichten der Ausgangsfolienbahn aus dem thermoplastischen Polymermaterial mit einer Druckfarbe und mit einem Haftvermittler;
Erwärmen der beschichteten Ausgangsfolienbahn zusammen mit der Ausgangsvliesbahn auf eine Temperatur, die oberhalb des Kristallitschmelzpunkts der wenigstens einen Komponente des Polymermaterials der Ausgangsfolienbahn und des Haftvermittlers liegt und unterhalb des Kristallitschmelzpunkts der Ausgangsvliesbahn liegt, um ein Laminat zu erhalten; und
Abkühlen des erhaltenen Laminats durch einen gekühlten Walzenspalt, wobei eine Druckfarbe, die den Haftvermittler enthält, verwendet wird.

Eine geeignete Ausgangsfolienbahn enthält wenigstens eine Polymerkomponente oder ein Polymermaterial, deren/dessen Schmelzpunkt unterhalb des Kristallitschmelzpunkts der Ausgangsvliesbahn liegt. In einer bevorzugten Ausführungsform des Verfahrens wird eine Ausgangsfolienbahn mit niedrig schmelzender Polymerkomponente und hochschmelzender Polymerkomponente verwendet, beispielsweise mit 15 bis 85 Gew.-% niedrig schmelzender Polymerkomponente und 85 bis 15 Gew.-% hoch schmelzender Polymerkomponente, bezogen auf 100 Gew.-% niedrig und hoch schmelzende Polymerkomponente. Bevorzugt wird eine Ausgangsfolienbahn mit wenigstens einem Polypropylen als niedrig schmelzender Polymerkomponente und wenigstens einem Polypropylen als hoch schmelzender Polymerkomponente verwendet. Daneben kann eine Ausgangsfolienbahn mit wenigstens einem Polyethylen als niedrig schmelzender Polymerkomponente und mit wenigstens einem Polyethylen als hoch schmelzender Polymerkomponente verwendet werden. Beispielhaft können eine Ausgangsfolienbahn und Ausgangsvliesbahn mit jeweils wenigstens einem Polyethylen oder jeweils wenigstens einem Polypropylen verwendet werden.

In weiteren bevorzugten Ausführungsformen des Verfahrens enthält die Ausgangsvliesbahn Fasern auf Basis von Polyethylen und/oder Polypropylen.

Bevorzugt wird die Ausgangsfolienbahn zu wenigstens 10%, insbesondere zu wenigstens 15%, bevorzugt zu wenigstens 20%, mit der Druckfarbe und mit dem Haftvermittler beschichtet. Die Druckfarbe ist bevorzugt eine Druckfarbe, welche beispielhaft Pigmente, Bindemittel und Lösemittel enthält. Sie ist entweder wasserbasiert oder lösemittelbasiert, insbesondere ist sie wasserbasiert oder Ethanol-basiert. Der Haftvermittler ist bevorzugt ein thermoplastisches Polymer auf Wasser- oder Lösemittel-Basis. Insbesondere umfasst er Ethylen-Vinylacetat-Copolymer (EVA-Copolymer) oder Polyamid als Polymer. Es wird eine Druckfarbe verwendet, die den Haftvermittler enthält. Damit können Druckfarbe und Haftvermittler in einem Schritt aufgetragen werden.

In weiteren Ausgestaltungen der Erfindung wird eine Ausgangsfolienbahn, die 1 bis 75 Gew.-%, insbesondere 50 bis 75 Gew.-% Füllstoff, insbesondere Kreide, enthält, verwendet. Dies ermöglicht die Herstellung atmungsaktiver Laminate.

In weiteren bevorzugten Ausführungsformen des Verfahrens erfolgt die Erwärmung auf 5 bis 20 °C unterhalb des Kristallitschmelzpunktes der Ausgangsvliesbahn. Weiterhin bevorzugt wird das Laminat im gekühlten Walzenspalt einer Abkühlung auf wenigstens 10 bis 30°C unterhalb des Kristallitschmelzpunktes der wenigstens einen Komponente des Polymermaterials der Ausgangsfolienbahn unterworfen. Die Ausgangsfolienbahn kann vor dem Bedrucken in Maschinen- oder Querrichtung oder in Maschinen- und Querrichtung gereckt worden sein. Bei gefüllten Folien können durch dieses Recken atmungsaktive Folien hergestellt werden, die zu atmungsaktiven Laminaten weiterverarbeitet werden.

Die Erfindung betrifft auch bedruckte Vlies-Folien-Laminate, die mit dem erfindungsgemäßen Verfahren hergestellt werden. Beispielsweise können die bedruckten Laminate ein Flächengewicht von 10 bis 45 g/m², insbesondere von 10 bis 35 g/m², bevorzugt von 10 bis 25 g/m², aufweisen. Weiterhin betrifft die Erfindung die Verwendung der bedruckten Laminate, insbesondere im Hygiene- oder Medikalbereich, beispielsweise für Backsheets in Windeln, für Betteinlagen oder Damenbinden.

Bevorzugte Ausführungsformen der Erfindung sind in der nachfolgenden Beschreibung, den Figuren und den Ansprüchen beschrieben.

Bei den Figuren zeigen:
Fig. 1 zeigt eine bevorzugte Ausführungsform zur Durchführung des erfindungsgemäßen Verfahrens, bei dem die verwendete Anlage acht Druckwerke aufweist.
Fig. 2 zeigt eine bevorzugte Ausführungsform zur Durchführung des erfindungsgemäßen Verfahrens, bei dem die verwendete Anlage ein Reckwerk und zwei Druckwerke aufweist.
Fig. 3 zeigt eine bevorzugte Ausführungsform zur Durchführung des erfindungsgemäßen Verfahrens, bei dem die verwendete Anlage ein Reckwerk und acht Druckwerke aufweist.

Das Verfahren der Erfindung ermöglicht die Herstellung von dünnen, bedruckten, atmungsaktiven oder nicht-atmungsaktiven Vlies-Folien-Laminaten, die die Anforderungen an Folien im Hygienebereich erfüllen. Beispielsweise können in Abhängigkeit von der Dicke der Folie und des Vlieses bedruckte Laminate mit einem Flächengewicht von unter 16 g/m², z.B. 14 g/m² oder 12 g/m² oder 10 g/m², in einem stabilen Prozess hergestellt werden. Solche Laminate können inline als sogenannte Backsheets mit textilem Griff (*Textile Backsheets*) für Windeln weiterverarbeitet werden. Ein weiterer Vorteil der nach dem Verfahren der Erfindung erhaltenen Laminate besteht aufgrund des Einsatzes der hoch schmelzenden Polymerkomponente, z.B. von Polypropylen, in einer verbesserten Thermostabilität. Dies ermöglicht beispielsweise bei der Verwendung der Laminate als Backsheets im Hygienebereich, dass die Innenausstattung von z.B. Babywindeln oder Inkontinenzartikeln mittels Hotmelt-Klebersystemen bei Temperaturen im Bereich von 140 bis 160 °C aufgebracht werden kann, ohne dass dadurch das dünne Laminat angeschmolzen wird. Die Erfindung ermöglicht die Herstellung von Vlies-Folien-Laminaten mit beliebig großen Druckfarbendeckungen.

In der vorliegenden Erfindung beziehen sich die angegebenen Schmelzpunkte, Schmelzbereiche und Kristallitschmelzpunkte auf eine Bestimmung gemäß DSC (Differential Scanning Calorimetry).

Erfindungsgemäß liegt der Schmelzpunkt der Ausgangsvliesbahn oberhalb des Kristallitschmelzpunkts wenigstens einer Komponente des Polymermaterials der Ausgangsfolienbahn oder oberhalb des Kristallitschmelzpunkts wenigstens eines Polymermaterials der Ausgangsfolienbahn. Geeignete Ausgangsfolienbahnen enthalten wenigstens eine Polymerkomponente, deren Schmelzpunkt unterhalb des Kristallitschmelzpunkts der Ausgangsvliesbahn liegt. Die wenigstens eine Polymerkomponente wird bei dem Verfahren der Erfindung in den schmelzeflüssigen Zustand erwärmt. Vorzugsweise enthält die Ausgangsfolienbahn wenigstens eine niedrig schmelzende Polymerkomponente und wenigstens eine hoch schmelzende Polymerkomponente. Vorzugsweise enthält die Ausgangsfolienbahn eine, bevorzugt zwei, niedrig schmelzende Polymerkomponente(n). Bevorzugt enthält sie eine, insbesondere zwei, hoch schmelzende Polymerkomponente(n). Die bei Durchführung des Verfahrens schmelzeflüssigen Polymermaterialien der Ausgangsfolienbahn werden der niedrig schmelzenden Polymerkomponente und die nicht-schmelzeflüssigen Polymermaterialien der Ausgangsfolienbahn werden der hoch schmelzenden Polymerkomponente zugeordnet.

Bekanntlich besitzen Polymere keinen scharf definierten Schmelzpunkt, sondern einen Schmelzbereich, wobei sich jedoch den kristallinen Bereichen eines Polymeren ein Kristallitschmelzpunkt zuordnen lässt. Dieser Kristallitschmelzpunkt liegt stets höher als der Schmelzpunkt oder Schmelzbereich der nicht-kristallinen Bestandteile. Der schmelzeflüssige Zustand ist dadurch beschrieben, dass der Schubmodul gegen Null geht. Im Falle von Polymeren mit kristallinen Bereichen sind letztere dann nicht mehr nachweisbar. Der Schubmodul kann beispielsweise nach ISO 6721-1 & 2 bestimmt werden. Bei der vorliegenden Erfindung wird die Ausgangsfolienbahn auf eine Temperatur erwärmt, bei der für wenigstens eine Polymerkomponente der Schubmodul Null beträgt. Enthält die Ausgangsfolienbahn eine niedrig schmelzende Polymerkomponente und eine hoch schmelzende Polymerkomponente, beträgt für die niedrig schmelzende Polymerkomponente der Schubmodul Null und für die hoch schmelzende Polymerkomponente ist der Schubmodul nicht Null. Bei der niedrig schmelzenden Polymerkomponente sind dann keine kristallinen Bereiche mehr nachweisbar und die niedrig schmelzende Polymerkomponente befindet sich im schmelzeflüssigen Zustand. Hingegen sind bei der hoch schmelzenden Polymerkomponente noch kristalline Bereiche nachweisbar und diese befindet sich unterhalb des schmelzeflüssigen Zustands.

Als Materialien für die Ausgangsfolienbahn kommen im Prinzip alle thermoplastischen Polymere in Betracht, die über entsprechende Schmelzpunkte verfügen. Hierzu sind zahlreiche Handelsprodukte auf dem Markt erhältlich. Vorzugsweise werden verschiedene Polyolefine, insbesondere Polyethylene, Polypropylene, Copolymerisate von Ethylen und Propylen, Copolymerisate von Ethylen und Propylen mit anderen Comonomeren, oder Gemische davon eingesetzt. Weiterhin sind Ethylenvinylacetat (EVA), Ethylenacrylat (EA), Ethylenethylacrylat (EEA), Ethylenacrylsäure (EAA), Ethylenmethylacrylat (EMA), Ethylenbutylacrylat (EBA), Polyester (PET), Polyamid (PA), z.B. Nylon, Ethylenvinylalkohole (EVOH), Polystyrol (PS), Polyurethan (PU) oder thermoplastische Olefinelastomere geeignet.

Um einen Verbund zwischen Folie und Vlies zu gewährleisten, enthält die Ausgangsfolienbahn wenigstens eine Polymerkomponente, die sich bei dem Verfahren der Erfindung im schmelzeflüssigen Zustand befindet, und mit der Ausgangsvliesbahn verträglich ist. Insbesondere enthält die Ausgangsfolienbahn wenigstens ein Polypropylen und die Ausgangsvliesbahn enthält ebenfalls wenigstens ein Polypropylen.

Die Gesamtmenge an niedrig schmelzender Polymerkomponente beträgt vorzugsweise 90 bis 10 Gew.-%, insbesondere 80 bis 20 Gew.-%, am meisten bevorzugt 70 bis 30 Gew.-%, und die Gesamtmenge an hoch schmelzender Polymerkomponente beträgt vorzugsweise 10 bis 90 Gew.-%, insbesondere 20 bis 80 Gew.-%, am meisten bevorzugt 30 bis 70 Gew.-%, jeweils bezogen auf 100 Gew.-% niedrig schmelzende und hoch schmelzende Polymerkomponente. Alternativ beträgt vorzugsweise die Gesamtmenge an niedrig schmelzender Polymerkomponente 85 bis 15 Gew.-% und die Gesamtmenge an hoch schmelzender Polymerkomponente 15 bis 85 Gew.-%, wiederum bezogen auf 100 Gew.-% niedrig und hoch schmelzende Komponente. Bei diesen Mengenangaben kann es sich beispielsweise bei der niedrig schmelzenden Polymerkomponente um ein oder mehrere Polypropylen(e) und ein oder mehrere Polyethylen(e) sowie bei der hoch schmelzenden Polymerkomponente um ein oder mehrere Polypropylen(e) handeln.

In einer besonders bevorzugten Ausführungsform enthält die Ausgangsfolienbahn wenigstens ein Polypropylen als niedrig schmelzende Polymerkomponente und wenigstens ein Polypropylen als hoch schmelzende Polymerkomponente.

Vorzugsweise enthält die niedrig schmelzende Polymerkomponente Ethylen-Copolymere, insbesondere Propylen-Ethylen-Copolymere, oder besteht aus diesen. Weiterhin kann die niedrig schmelzende Polymerkomponente Ethylenpolymere, wie LDPE (Low Density Polyethylene), LLDPE (Linear Low Density Polyethylene), MDPE (Medium Density Polyethylene) und HDPE (High Density Polyethylene) enthalten. Andere bevorzugte Comonomere sind andere Olefine wie Buten, Hexen oder Octen. Die Ethylen-Copolymeren, insbesondere Propylen-Ethylen-Copolymere, können auch andere thermoplastische Polymere enthalten. Bevorzugt enthält die niedrig schmelzende Polymerkomponente ein Polypropylen. Bekanntlich gibt es hochkristallines isotaktisches, weniger kristallines syndiotaktisches und amorphes ataktisches Polypropylen, die über unterschiedliche Schmelzpunkte, Schmelzbereiche oder Kristallischmelzpunkte verfügen. Bei Verwendung von amorphem ataktischem Polypropylen, das einen wesentlich niedrigeren Schmelzpunkt oder Schmelzbereich als isotaktisches und gegebenenfalls auch syndiotaktisches Polypropylen hat, wäre dieses in Abhängigkeit von der Erwärmungstemperatur bei dem erfindungsmäßen Verfahren gegebenenfalls der niedrig schmelzenden Polymerkomponente zuzurechnen.

Vorzugsweise enthält die hoch schmelzende Polymerkomponente wenigstens ein Polypropylen, dessen Schmelzpunkt, Schmelzbereich oder Kristallitschmelzpunkt wesentlich höher als der der niedrig schmelzenden Polymerkomponente liegt. Geeignetes Polypropylen ist insbesondere isotaktisches Polypropylen. Es kann auch syndiotaktisches Polypropylen verwendet werden, sofern dessen Schmelzpunkt, Schmelzbereich oder Kristallitschmelzpunkt wesentlich höher als der der niedrig schmelzenden Polymerkomponente liegt. Geeignete Polypropylene sind im Handel erhältlich, beispielsweise für die Herstellung von Blas- und/oder Cast-Folien.

Die hoch schmelzende Polymerkomponente kann sowohl Propylenhomopolymere als auch Propylencopolymere mit Propylen als Hauptmonomerem umfassen. Geeignete Comonomere für Propylencopolymere sind andere Olefine als Propylen, vorzugsweise Ethylen. Bei den Propylen-Ethylen-Copolymeren beträgt der Ethylenanteil vorzugsweise 2bis 30 Gew.-%, besonders bevorzugt 2 bis 20 Gew.-% und insbesondere 2 bis 15 Gew.-% oder 3 bis 20 Gew.-%.

Nachfolgend sind für einige Polyethylene und Polypropylene die Schmelzbereiche angegeben:
LDPE: 110 - 114°C;
LLDPE: 115 - 130°C;
HDPE: 125 - 135°C;
Propylen-Homopolymere: 150 - 165°C;
Propylen-Ethylen-Copolymere: 120 - 162°C, bei sehr wenig Ethylen auch höhere Temperaturen möglich;
Bimodale Propylen-Ethylen-(Homo)Copolymere: 110 - 165 °C.

Es ist auch möglich, sogenannte bimodale Polypropylene zu verwenden. Dabei handelt es sich um zwei verschiedene Polypropylene mit jeweils unterschiedlichem Copolymeranteil, die in einem Rohstoff zusammengefasst sind. Ein solches bimodales Polypropylen hat zwei Kristallitschmelzpunkte, wobei in der Regel über eine DSC-Analyse auch die ungefähren Anteile der zwei Polypropylene bestimmt werden können. Als Beispiel sei ein bimodales Polypropylen mit den Kristallitschmelzpunkten 125°C und 143 °C mit einem Anteil der zwei verschiedenen Polypropylene von 25/75 genannt. Bei einer Erwärmungstemperatur von 130 °C wären die 25 % Polypropylen mit Kristallitschmelzpunkt 125 °C der niedrig schmelzenden Polymerkomponente und die 75 % Polypropylen mit Kristallitschmelzpunkt 143 °C der hoch schmelzenden Polymerkomponente zuzurechnen.

Bei dem Verfahren der Erfindung wird die Erwärmung der Ausgangsfolienbahn zusammen mit der Vliesbahn bis zum oder oberhalb dem schmelzeflüssigen Zustand wenigstens einer Komponente des Polymermaterials der Ausgangsfolienbahn und unterhalb des schmelzeflüssigen Zustands der Ausgangsvliesbahn durchgeführt. Bis zum schmelzeflüssigen Zustand bedeutet hierbei, dass sich wenigstens ein Polymermaterial oder wenigstens eine Polymerkomponente der Ausgangsfolienbahn im schmelzeflüssigen Zustand befindet. Es wird jedoch nur so hoch erwärmt, dass sich die Ausgangsvliesbahn nicht im schmelzeflüssigen Zustand befindet. Die Ausgangsfolienbahn wird somit wenigstens bis zu ihrem teilweise schmelzeflüssigen Zustand erwärmt, während die Ausgangsvliesbahn nicht angeschmolzen wird.

Ebenso wie sich in der niedrig schmelzenden Polymerkomponente spezielles geschmolzenes Polypropylen befinden kann, kann sich auch in der hoch schmelzenden Polymerkomponente ein spezielles nicht geschmolzenes Polyethylen befinden, das dann der hoch schmelzenden Polymerkomponente zugerechnet wird. Bevorzugt enthält die hoch schmelzende Polymerkomponente wenigstens ein Polypropylen.

Um eine stabile Prozessführung über einen längeren Zeitraum zu ermöglichen, sollten zweckmäßigerweise die (Kristallit-)Schmelzpunkte der niedrig und hoch schmelzenden Polymerkomponenten der Ausgangsfolienbahn nicht zu nahe beieinanderliegen. Vorzugsweise liegt der Kristallitschmelzpunkt der niedrig schmelzenden Polymerkomponente oder, bei Anwesenheit mehrerer niedrig schmelzender Polymerkomponenten, der Kristallitschmelzpunkt derjenigen mit dem höchsten Kristallitschmelzpunkt davon, mindestens etwa 5 °C, verzugsweise mindestens etwa 10 °C und insbesondere mindestens etwa 20 °C unterhalb des Kristallitschmelzpunkts oder des schmelzeflüssigen Zustandes der hoch schmelzenden Polymerkomponente oder, bei Anwesenheit mehrerer hoch schmelzender Polymerkomponenten, derjenigen mit dem niedrigsten Kristallitschmelzpunkt davon.

Das erfindungsgemäße Verfahren ermöglicht auch die Herstellung atmungsaktiver Laminate. In diesem Fall enthalten die Ausgangsfolien zusätzlich Füllstoffe und werden vor dem Bedrucken und Erwärmen einem Reckvorgang unterzogen, wobei sich an den Füllstoffen Poren ausbilden können. Geeignete Füllstoffe unterliegen keinen Beschränkungen und sind dem Fachmann bekannt. Es eignen sich alle Stoffe, die auf eine bestimmte Größe gemahlen werden können, im Extruder nicht schmelzen und nicht gereckt werden können. Besonders geeignet sind anorganische Füllstoffe, wie Kreide (Calciumcarbonat), Ton, Kaolin, Calciumsulfat (Gips) oder Magnesiumoxid. Daneben eignen sich auch synthetische Füllstoffe, wie Kohlenstofffasern, Cellulosederivate, gemahlene Kunststoffe oder Elastomere. Am meisten bevorzugt ist Calciumcarbonat oder Kreide wegen seines günstigen Preises, aber auch unter dem Gesichtspunkt der Nachhaltigkeit. Der Füllstoff kann eine Partikelgröße von z.B. 0,8 bis 2 µm haben.

Falls ein Füllstoff mit einer gleichmäßigeren Partikelgröße als bei Kreide gewünscht ist, besteht auch die Möglichkeit, synthetische Füllstoffe mit einheitlicher Partikelgröße oder Partikelgrößenverteilung zu verwenden. Die Folie kann wenig Füllstoffe enthalten, z. B. 5 bis 45 Gew.-% oder 10 bis 50 Gew.-%, so dass sich bei einem Reckvorgang zwar Poren ausbilden, diese aber isoliert vorliegen und die Folie nicht atmungsaktiv ist. Um eine Atmungsaktivität der Folie zu erreichen, werden zweckmäßigerweise wenigstens 35 Gew.-% Füllstoff, insbesondere wenigstens 45 Gew.-% Füllstoff, bevorzugt wenigstens 55 Gew.-% Füllstoff, stärker bevorzugt wenigstens 65 Gew.-% Füllstoff, bezogen auf 100 Gew.-% der gesamten Rezeptur der Ausgangsfolienbahn, einschließlich Füllstoff(en), verwendet. Die Obergrenze an Füllstoff wird dadurch bestimmt, dass keine Poren mehr, sondern Löcher entstehen, oder die Folie reißt. Geeignete Folienrezepturen mit Füllstoff können vom Fachmann routinemäßig bestimmt werden. Besonders geeignet ist eine Rezeptur mit 35 bis 75 Gew.-%, insbesondere 45 bis 75 Gew.-%, bevorzugt 55 bis 70 Gew.-%, Füllstoff bezogen auf 100 Gew.-% Ausgangsfolienbahn. Beispielhafte Rezepturen für nicht-atmungsaktive Folien umfassen 5 bis 50 Gew.-%, insbesondere 10 bis 40 Gew.-%, Füllstoffe, bezogen auf 100 Gew.-% Ausgangsfolienbahn. Beispielhafte Rezepturen für atmungsaktive Folien umfassen 35 bis 80 Gew.-%, insbesondere 45 bis 75 Gew.-%, Füllstoffe, bezogen auf 100 Gew.-% Ausgangsfolienbahn. Es ist darauf zu achten, den Anteil der niedrig schmelzenden Komponente nicht so hoch zu wählen, dass eine Atmungsaktivität zwar erreicht wird, diese aber wieder verloren geht, weil die Poren sich wieder verschließen.

Die Ausgangsfolienbahnen für die Durchführung des Verfahrens der Erfindung können durch beliebige, im Stand der Technik bekannte Verfahren hergestellt werden. Beispielsweise kann die Ausgangsfolienbahn hergestellt werden, indem die Polymerbestandteile, und gegebenenfalls Füllstoffe, in einem Extruder, z.B. einem Compounding-Extruder, auf eine Temperatur deutlich über der Schmelzflusstemperatur der Polymerbestandteile (z.B. über 200°C) erhitzt und verschmolzen werden. Dem schließt sich ein Cast-Verfahren (Gießverfahren), z.B. über eine Schlitzdüse, oder ein Blasverfahren an. Diese Verfahren sind im Stand der Technik bekannt. Beim Schlitzdüsenverfahren wird eine Folie durch eine Breitschlitzdüse extrudiert. Bevorzugt ist das Blasverfahren, bei dem ein Blasschlauch gebildet wird. Die gebildete Schlauchfolie kann flach aufeinandergelegt und an den Enden aufgeschlitzt oder aufgetrennt werden, so dass zwei Folienbahnen entstehen.

In bevorzugten Ausführungsformen wird die Ausgangsfolienbahn vor dem Bedrucken in Maschinenrichtung (MD), Querrichtung (CD), oder in Maschinen- und Querrichtung gereckt. Ein Recken, Strecken oder Verstrecken einer Folie bedeutet eine Dehnung der Folie in eine angegebene Richtung, was zu einer Verringerung der Foliendicke führt. Die Folie kann in Maschinen- oder Längsrichtung (MD) gereckt sein, beispielsweise durch ein Reckwerk, welches zwei oder mehrere Walzen umfasst, z.B. drei Walzen, die bei unterschiedlicher Geschwindigkeit angetrieben werden. Die Folie kann beispielsweise bei einem Reckverhältnis von 1:1,5 gereckt werden, was bedeutet, dass die Foliendicke von z.B. 15 µm auf 10 µm verringert wird. Es ist auch möglich, die Folienbahn zusätzlich einer Querverstreckung (CD) zu unterwerfen. Ein solches biaxiales Verstrecken kann beispielsweise durch auf dem Markt erhältliche Reckmaschinen, z.B. von der Firma Brückner, erreicht werden. Das verwendete Reckverhältnis hängt von der Folienrezeptur und den gewählten Verfahrensparametern ab und kann wenigstens 1:1,2, bevorzugt wenigstens 1:1,5, insbesondere wenigstens 1:2, stärker bevorzugt wenigstens 1:2,5, mehr bevorzugt wenigstens 1:3 oder wenigstens 1:4 betragen.

Die Ausgangsfolienbahn kann einschichtig sein, also monoextrudiert. Sie kann mehrschichtig sein, was bedeutet, dass sie coextrudiert ist. Es gibt keine Beschränkung bezüglich der Anzahl der verwendeten Schichten. Es können eine oder mehrere Schichten vorliegen, z. B. eine Schicht, zwei Schichten, drei Schichten oder vier Schichten. Möglich sind auch z. B. bis 5, 7 oder 9 Schichten. Die Schichten können gleiche oder unterschiedliche Rezepturen aufweisen, wobei die Zuordnung zur niedrig oder hoch schmelzenden Polymerkomponente jeweils durch den Kristallitschmelzpunkt bestimmt wird. Die Schichten einer Ausgangsfolienbahn können durch Coextrusion hergestellt werden, wobei keine Beschränkung bei der Anzahl der coextrudierten Schichten einer Ausgangsfolienbahn besteht. Bei mehrschichtigen Ausgangsfolienbahnen kann wenigstens eine Lage durch Blasextrusion und wenigstens eine andere Lage durch Castextrusion hergestellt werden. Es besteht keine Beschränkung bei der Kombination von blasextrudierten und/oder castextrudierten Folien oder Folienschichten. Es besteht keine Beschränkung bei der Anzahl der coextrudierten Schichten. In anderen Ausführungsformen ist die Ausgangsfolienbahn nicht coextrudiert.

Die Ausgangsfolienbahn kann in beispielhaften Ausführungsformen auch wie nachstehend beschrieben hergestellt werden:
- blasextrudiert, geschlitzt, auf zwei separate Bahnen bzw. separate Rollen;
- blasextrudiert, geschlitzt, auf zwei oder mehrere separate Bahnen gleichzeitig;
- blasextrudiert, geschlitzt, flachgelegt als nicht getrennter Schlauch;
- blasextrudiert, geschlitzt in zwei oder mehrere separate Bahnen, die von verschiedenen Extrudern kommen; oder
- castextrudiert in zwei oder mehrere separate Bahnen gleichzeitig.

Es ist auch möglich, die Ausgangsfolienbahnen Inline herzustellen. In diesem Fall liegt ein Produktionsschritt für die Prozesse Extrusion und Recken (MDO, biaxial oder Ringrolling) sowie das Bedrucken vor.

Die beim Verfahren der Erfindung eingesetzten Ausgangsfolienbahnen können eingefärbt sein, z. B. weiß mit Titandioxid. Weiterhin können die Ausgangsfolienbahnen übliche Zusatzstoffe und Verarbeitungshilfsmittel enthalten. Insbesondere handelt es sich hierbei neben den bereits genannten Füllstoffen um Pigmente oder andere farbgebende Stoffe, Antihaftmittel, Gleitmittel, Verarbeitungshilfsmittel, antistatische Mittel, keimverhindernde Mittel (Biozide), Antioxidationsmittel, Wärmestabilisierungsmittel, Stabilisierungsmittel gegenüber UV-Licht oder andere Mittel zur Eigenschaftsmodifizierung. Typischerweise werden solche Stoffe, ebenso wie Füllstoffe, bereits vor dem erfindungsgemäßen Erwärmen der Ausgangsfolienbahn zugegeben, z.B. bei deren Herstellung in die Polymerschmelze oder vor dem Extrudieren zu einer Folie.

Die Ausgangsfolienbahn weist bevorzugt Flächengewichte im Bereich unter 50 g/m², insbesondere unter 40 g/m², bevorzugt unter 30 g/m², stärker bevorzugt unter 20 g/m², auf. Möglich sind auch Flächengewichte im Bereich unter 10 g/m² oder unter 5 g/m². Bevorzugte Flächengewichte liegen im Bereich von 1bis 30 g/m², 1 bis 25 g/m² oder 1 bis 20 g/m², insbesondere von 1 bis 15 g/m², stärker bevorzugt von 2 bis 10 g/m² oder 7 bis 20 g/m². Die Flächengewichte können auch 1 bis 10 g/m², 5 bis 10 g/m² oder 5 bis 15 g/m² betragen. Die Ausgangsfolienbahn kann Dicken im Bereich von 2 bis 30 µm, insbesondere von 2 bis 15 µm, 5 bis 20 µm oder 5 bis 10 µm aufweisen.

Auch die Herstellung der Ausgangsvliesbahn erfolgt durch beliebige, im Stand der Technik bekannte Verfahren und unterliegt keinen Beschränkungen. Geeignet sind alle Vliesstoffe, die zumindest eine Rezepturkomponente auf Basis eines thermoplastischen Polymers enthalten. Die Vliese können Fasern aus Polyethylen (PE), Polypropylen (PP), Polyester (PET), Polyamid (PA), Rayon, Cellulose, und Mischungen dieser Fasern enthalten. Auch Bi- oder Multikomponentenfasern sind verwendbar. Besonders bevorzugt werden z.B. Vliese aus Spinn- oder Stapelfasern auf Basis von PP, PE oder PET, sowie Vliese aus Mischungen von PP und PE oder Mischungen von PET und PP oder PE verwendet. Am meisten bevorzugt sind Fasern auf Basis von PP, PE, oder Mischungen von PP und PE. Um einen Verbund zwischen Folie und Vlies zu gewährleisten, enthält die Ausgangsvliesbahn zweckmäßigerweise wenigstens eine thermoplastische Polymerkomponente, die eine ähnliche Morphologie wie eine Polymerkomponente der Ausgangsfolienbahn aufweist, beispielsweise Polypropylen.

Die Ausgangsvliesbahn weist einen Schmelzpunkt auf, der oberhalb des Kristallitschmelzpunkts wenigstens einer Polymerkomponente der Ausgangsfolienbahn, insbesondere einer niedrigschmelzenden Polymerkomponente der Ausgangsfolienbahn, liegt. Die Vliesbahn kann ebenso wie die Ausgangsfolienbahn wenigstens eine niedrigschmelzende Polymerkomponente und wenigstens eine hochschmelzende Polymerkomponente, insbesondere eine niedrigschmelzende Polymerkomponente und eine hochschmelzende Polymerkomponente, aufweisen. Es ist möglich, einlagige, zweilagige oder mehrlagige Vliese einzusetzen. In jedem Fall ist zu gewährleisten, dass zumindest eine Polymerkomponente der Ausgangsvliesbahn einen Schmelzpunkt oberhalb des Kristallitschmelzpunkts wenigstens einer Polymerkomponente der Ausgangsfolienbahn aufweist. Bei mehrlagigen Vliesen kann dies die mit der Folienbahn in Kontakt befindliche Vlieslage sein. Zweckmäßigerweise wird die Ausgangsvliesbahn bei Durchführung des erfindungsgemäßen Verfahrens nicht angeschmolzen.

Die Ausgangsvliesbahn weist bevorzugt Flächengewichte im Bereich von 4 bis 35 g/m², insbesondere von 6 bis 25 g/m², bevorzugt von 8 bis 15 g/m², stärker bevorzugt von 8 bis 14 g/m², auf. Möglich sind auch Flächengewichte im Bereich von 8 bis 50 g/m².

Das erfindungsgemäße Verfahren kann mit allen thermoplastischen Rezepturen für Folie und Vlies durchgeführt werden, bei denen die Schmelzpunkte dem Erfordernis des erfindungsgemäßen Verfahrens genügen. Zweckmäßigerweise werden die Rohstoffe von Folie und Vlies und Haftvermittler so aufeinander abgestimmt, dass eine ausreichende Verbundhaftung zwischen Folie und Vlies erreicht wird, auch in Abhängigkeit von der Druckfarbendeckung. Geeignete Materialkombinationen sind dem Fachmann bekannt oder können anhand einiger weniger orientierender Versuche ermittelt werden.

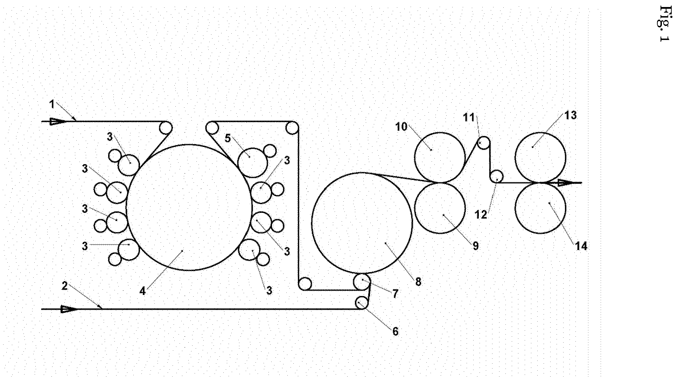

Die Ausgangsfolienbahn wird nach üblichen Verfahren bedruckt. In Abhängigkeit von der Anzahl der zu bedruckenden Farben oder dem gewünschten Druckmotiv wird mit einem oder mehreren Druckwerken gearbeitet. In den Figuren 1 bis 3 sind beispielhaft Zwei- und Acht-Farben-Druckwerke gezeigt. Mit den Druckwerken kann eine beliebige gewünschte Druckfarbendeckung eingestellt werden. Vorzugsweise beträgt die Druckfarbendeckung wenigstens 10%, wenigstens 15%, bevorzugt wenigstens 20%. Die Obergrenzen für die Druckfarbendeckung liegen vorzugsweise bei höchstens 100%, insbesondere höchstens 95%, bevorzugt höchstens 90%. Bevorzugte Bereiche für die Druckfarbendeckung liegen von 15% bis 100% oder von 15% bis 95%, insbesondere von 20% bis 100% oder von 20% bis 95%. Möglich sind auch Bereiche von 25% bis 85% oder 30% bis 80% oder 30% bis 70%.

In der vorliegenden Erfindung ist die prozentuale Druckfarbendeckung auf eine Folienfläche von 10 m² bezogen. Das bedeutet, dass bei einer Druckfarbendeckung von beispielsweise 25% auf einer Folienfläche von 10 m² 25% dieser Folienfläche mit Druckfarbe bedeckt sind.

Geeignete Druckfarben unterliegen keine Beschränkungen. Es eignen sich alle für Kunststofffolien bekannte Druckfarben und es können beliebig viele Druckfarben verwendet werden. Geeignete Druckfarben sind kommerziell erhältlich. Beispielhafte Druckfarbe enthalten Pigmente, und Bindemittel und/oder Lösemittel sowie gegebenenfalls Additive. Die Druckfarbe kann wasserbasiert oder lösemittelbasiert sein. Insbesondere ist die Druckfarbe wasserbasiert oder auf Basis von Ethanol.

Als Haftvermittler eignen sich thermoplastische Polymere auf Wasser- oder Lösemittel-Basis. Geeignete Haftvermittler sind dem Fachmann bekannt und kommerziell erhältlich, beispielsweise als wasser- oder lösemittel-basierter Heißschmelzkleber für PE- oder PP-Folien, z.B. unter der Bezeichnung ADCOTE™ von Dow Chemical Company. Geeignete Basispolymere für den Haftvermittler sind bekannt, bevorzugt sind ein Ethylen-Vinylacetat-Copolymer (EVA-Copolymer) oder Polyamid. Der Haftvermittler stellt einen Verbund zwischen der bedruckten Folie und dem Vlies her. Bei dem erfindungsgemäßen Verfahren wird, anderes als übliche Heißschmelzkleber, die in heißer oder schmelzflüssiger Form aufgetragen oder aufgesprüht werden, der Haftvermittler in wasser- oder lösemittel-basierter Form auf die bedruckten Stellen der Folie aufgetragen oder zusammen mit der Druckfarbe auf die Folie aufgetragen, beispielsweise mit einem Druckwerk, und anschließend werden Folie und Vlies oberhalb des Schmelzpunkts des Haftvermittlers erwärmt, so dass sich der Haftvermittler im schmelzeflüssigen Zustand befindet oder wenigstens eine Polymerkomponente des Haftvermittlers im schmelzeflüssigen Zustand befindet. Der Auftrag des Haftvermittlers auf Wasser- oder Lösemittel-Basis ermöglicht eine genaue Dosierung.

In besonders bevorzugten Ausführungsformen wird eine Druckfarbe verwendet, die den Haftvermittler enthält. In anderen bevorzugten Ausführungsformen werden Druckfarbe und Haftvermittler getrennt aufgebracht.

Zweckmäßigerweise wird der Haftvermittler mit einem Druckwerk aufgetragen, wie es auch für den Auftrag der Druckfarben verwendet wird. Beispiele sind in den Figuren 1 bis 3 gezeigt. Der Haftvermittler kann an beliebigen Stellen der Folie aufgetragen werden. Zweckmäßigerweise wird er an den bedruckten Stellen der Folie aufgebracht.

Die Ausgangsfolienbahn und Ausgangsvliesbahn werden erfindungsgemäß gemeinsam erwärmt und anschließend durch einen gekühlten Walzenspalt geführt. Bevorzugt erfolgt die Erwärmung auf 5 bis 20 °C, insbesondere 10 bis 20 °C, unterhalb des Kristallitschmelzpunktes der Ausgangsvliesbahn.

Erfindungsgemäß kann die Erwärmung mittels wenigstens einer Heizwalze erfolgen. Es kommt nicht darauf an, ob die Ausgangsfolienbahn oder Ausgangsvliesbahn auf dem Heizzylinder aufliegt. In einer bevorzugten Ausführungsform steht die Ausgangsvliesbahn in direktem Kontakt mit der Heizzylinderoberfläche und die Ausgangsfolienbahn wird darüber geführt. In einer anderen bevorzugten Ausführungsform steht die Ausgangsfolienbahn in direktem Kontakt mit der Heizzylinderoberfläche und die Ausgangsvliesbahn wird darüber geführt. Vorzugsweise erfolgt die Erwärmung mittels einer oder mehrerer Heizwalzen, bei denen es sich um Kontaktwalzen handelt, die mittels eines Wärmeträgers, z.B. Dampf, Wasser, Öl, auf die vorgegebene Temperatur erhitzt werden. In einer bevorzugten Ausführungsform wird eine einzelne Heiz- oder Kontaktwalze eingesetzt. Es ist aber auch möglich, zwei oder mehrere Heizwalzen einzusetzen, wobei sichergestellt werden muss, dass der schmelzeflüssige Zustand wenigstens einer Polymerkomponente der Ausgangsfolienbahn vor dem Kühlwalzenspalt erreicht wird. Um zu gewährleisten, dass die Ausgangsfolienbahn die Temperatur der Heizwalze tatsächlich erreichen oder dass bei hohen Produktionsgeschwindigkeiten (bei denen die Oberflächentemperatur des Heizzylinders höher im Vergleich zu den Folien ist) der schmelzeflüssige Zustand einer Polymerkomponente sicher erreicht wird, ist für eine ausreichende Verweilzeit der Ausgangsfolienbahn auf der Heizwalzenoberfläche zu sorgen. Dies kann über eine entsprechende Umschlingungsstrecke des Heizzylinders, den Heizwalzendurchmesser und/oder die Folienbahngeschwindigkeit nach Maßgabe der Foliendicke erfolgen. Zweckmäßigerweise kann eine Heizwalze mit antihaft-beschichteter Oberfläche verwendet werden, um ein leichteres Ablösen der auf der Heizwalze aufliegenden Folienbahn zu erreichen und damit ein Abreißen der Folienbahn zu verhindern. Dadurch wird eine Verschiebung des Ablösepunktes in Drehrichtung der Heizwalze vermieden und es ist keine oder nur mehr eine geringe Voreilung nötig. Beispielsweise wird hierzu eine PTFE (Polytetrafluorethylen)-beschichtete Heizwalze verwendet.

An folgendem Beispiel wird die Erfindung für eine geeignete Rezeptur für Folie und Vlies bei passenden Verfahrensbedingungen veranschaulicht. Ist die verwendete Ausgangsvliesbahn auf Basis eines Polypropylens und hat einen Schmelzpunkt im Bereich von 160 bis 165 °C, so ergibt sich ein ausreichender Verbund zwischen Folie und Vlies, wenn sich beim Polymermaterial der Ausgangsfolienbahn ein Polypropylen als verbundgebende Komponente im schmelzeflüssigen Zustand befindet. Ein ausreichender Verbund wäre in der Regel nicht gegeben, wenn sich nur ein Polyethylen im schmelzeflüssigen Zustand befindet. Übertragen auf eine Ausgangsfolienrezeptur mit 35 Gew.-% LDPE (Schmelzpunkt 112 °C), 20 Gew.-% LLDPE-Buten (Schmelzpunkt 121 °C), 10 Gew.-% Polypropylen (Schmelzpunkt 162 °C), 30 Gew.-% Random-Polypropylen-Copolymer (Schmelzpunkt 140 °C) und 5 Gew.-% TiO₂-Weiß-Konzentrat, Farbe und Additive, würde dies bedeuten, dass sich beim Thermolaminier-Vorgang das LDPE, das LLDPE-Buten und das Random-Polypropylen-Copolymer (Schmelzpunkt 140 °C) im schmelzeflüssigen Zustand befinden, hingegen nicht das Polypropylen (Schmelzpunkt 162 °C). Das heißt, die Heizwalze, bei der die Vliesbahn zugeführt wird, muss eine entsprechende Erwärmung der Ausgangsfolienbahn, beispielsweise auf 142 °C oder 143°C, sicherstellen. Bei dieser Temperatur wird ein ausreichender Verbund der Folie zum Polypropylen-Vlies erreicht und es besteht nicht die Gefahr eines Anschmelzens des Vlieses.

Die Erwärmung der Bahnen kann mit anderen Erwärmungsmethoden, wie Strahlungswärme, z.B. mit Infrarotheizung oder -strahlern, unterstützt werden. Es kann zusätzlich zu einer oder mehreren Heizwalzen eine andere Erwärmung, z.B. Infrarotheizung, vorgesehen sein.

Erfindungsgemäß wird das erhaltene Laminat nach der Erwärmung durch einen gekühlten Walzenspalt geführt. Die den Kühlwalzenspalt bildenden Walzen sind so gekühlt, dass eine schnelle und schlagartige Abkühlung erreicht wird. Eine Abkühlung auf eine Temperatur unterhalb des Kristallitschmelzpunktes der niedrig schmelzenden Polymerkomponente der Ausgangsfolienbahn, vorzugsweise auf wenigstens 5 °C darunter, insbesondere auf wenigstens 10 °C darunter, ist zweckmäßig. Bevorzugte Abkühlbereiche sind 5 bis 10 °C, stärker bevorzugt 10 bis 30 °C, unterhalb des Kristallitschmelzpunktes der niedrig schmelzenden Polymerkomponente der Ausgangsfolienbahn. Beispielsweise kann die Kühlung der Walzen mit Wasser in einem Temperaturbereich von 5 bis 20 °C, z.B. Wasser von etwa 10 °C, erfolgen. Der Abstand zwischen der Heizwalze oder, bei Verwendung mehrerer Heizwalzen, der letzten Heizwalze und/oder anderer Erwärmungsquellen und dem Kühlwalzenspalt wird hierbei wegen möglicher Wärmeverluste nicht zu groß gewählt. Bei dem Kühlwalzenspalt kann es sich im einfachsten Fall z.B. um einen Glattwalzenspalt mit zwei glatten Walzen handeln. Im Fall von Hygienefolien wird der Walzenspalt jedoch vorzugsweise von einem Walzenpaar mit einer Strukturwalze und einer Glattwalze gebildet, wodurch die Folienbahn eine strukturierte Oberfläche erhält. Bevorzugte Strukturen im Hygienebereich sind Mikrostrukturen, z.B. ein Pyramidenstumpf. Vorzugsweise besteht der gekühlte Walzenspalt aus einer Stahlwalze und einer im Gegendruck arbeitenden Gummiwalze, wobei die Stahlwalze mit der strukturierten Oberfläche versehen ist.

In Abhängigkeit von den Folienparametern und anderen Verfahrensbedingungen bewegen sich die Folienbahngeschwindigkeiten im Bereich von 50 bis 900 m/min. Die Geschwindigkeit der Heizwalze(n) beträgt vorzugsweise 50 bis 900 m/min, insbesondere 50 bis 800 m/min, bevorzugt 100 bis 600 m/min. Die Geschwindigkeit der den Kühlwalzenspalt bildenden Walzen beträgt vorzugsweise 50 bis 900 m/min, insbesondere 50 bis 800 m/min, bevorzugt 100 bis 600 m/min.

Das erfindungsgemäße Verfahren ermöglicht die Herstellung von Vlies-Folien-Laminaten mit geringen Flächengewichten von z. B. 8, 9, 10, 11, 12, 13, 14, 15, 16, 17, 18, 19, 20 oder 25 g/m². Bevorzugte Flächengewichtsbereiche liegen von 8 bis 25 g/m² oder von 10 bis 30 g/m².

Die erfindungsgemäß erhaltenen Laminate verfügen, trotzdem sie dünn sind, über ausgezeichnete mechanische Eigenschaften und über zusätzlich noch immer hohe Durchstoßfestigkeiten (d.h. Widerstand gegenüber Superabsorber-Körnern z.B. in Windeln) und hohe Thermostabilitäten (d.h. Widerstand gegenüber Hotmelt-Klebern).

Erfindungsgemäß erhaltene Laminate können in bekannter Weise weiterverarbeitet werden, z.B. zu Windeln.

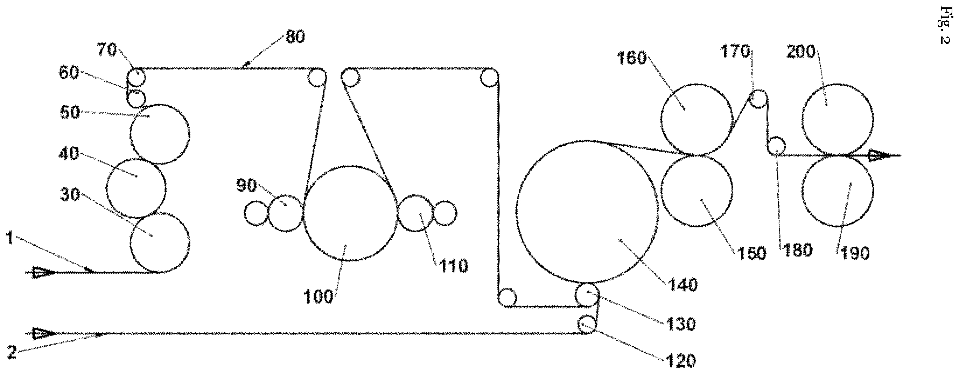

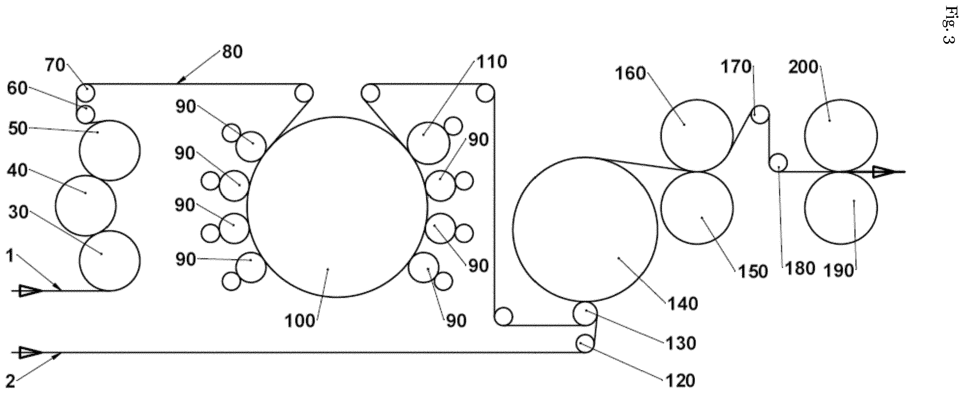

Die Figuren 1 bis 3 zeigen bevorzugte Ausführungsformen zur Herstellung bedruckter Laminate, wobei die Figuren 2 und 3 atmungsaktive Laminate betreffen. In allen Figuren bezeichnet die Bezugsziffer 1 die Ausgangsfolienbahn, die bedruckt und mit Haftvermittler beschichtet wird, und die Bezugsziffer 2 bezeichnet die Ausgangsvliesbahn.

Figur 1 zeigt eine Ausführungsform des erfindungsgemäßen Verfahrens. Gemäß Figur 1 wird eine Ausgangsfolienbahn einem Acht-Farben-Druckwerk mit den Druckwerken 3 und 5 sowie dem zentralen Druckzylinder 4 zugeführt. Über die Druckwerke 3 können sieben Farben und damit ein sieben-farbiges Druckmotiv (bei beliebiger Druckfarbendeckung) sowie über das Druckwerk 5 der Haftvermittler (an den bedruckten Stellen) aufgebracht werden. Bei geeigneter Rezeptur ist es ist auch möglich, Druckfarbe und Haftvermittler jeweils gleichzeitig mittels Druckwerk 3 und 5 aufzubringen, was das Aufbringen achtfarbiger Druckmotive ermöglicht. Die Folienbahn über dann über Walzen und eine Umlenk- und Anpresswalze 7 auf einen Heizzylinder 8 geführt. Weiterhin wird eine Ausgangsvliesbahn 2 über eine Umlenk- und Anpresswalze 6 auf den Heizzylinder 8 geführt Bei dem Heizzylinder 8 oder der Heizwalze 8 handelt es sich z.B. um eine antihaftend beschichtete Stahlwalze, die mittels Wärmezufuhr auf die gewünschte Oberflächentemperatur erhitzt wird. Dort wird erfindungsgemäß erwärmt und die Folienbahn verbindet sich mit der Vliesbahn zu dem Laminat. Das Laminat läuft von der Heizwalze 8 in einen Kühlwalzenspalt, der von den Walzen 9 und 10 gebildet wird. Die Walze 10 ist vorzugsweise als Struktur- oder Prägewalze ausgebildet, wodurch die Folienbahn eine Prägestruktur oder strukturierte Oberfläche erhält. Die Walze 9 ist vorzugsweise eine Gummiwalze. Das Walzenpaar 9/10 ist vorzugsweise wassergekühlt, z.B. mit Wasser von etwa 10 °C. Im Kühlwalzenspalt wird das Laminat schockartig gekühlt und geprägt. Nach dem Walzenpaar 9/10 kann das Laminat direkt abgenommen werden, oder über Umlenkwalzen 11 und 12 einer Ringrolling-Anlage 13, 14 zugeführt werden. Das fertige Laminat kann dann in an sich bekannter Weise weiterverarbeitet werden.

Figur 2 zeigt eine bevorzugte Ausführungsform zur Herstellung bedruckter Laminate, die atmungsaktiv sein können. Eine Ausgangsfolienbahn 1läuft über ein Reckwerk mit den Walzen 30, 40 und 50, wodurch sie gereckt wird. Ist die Ausgangsfolienbahn gefüllt, so wird sie atmungsaktiv. Anschließend wird die gereckte Folie über Umlenkwalzen 60 und 70 als gereckte Folienbahn 80 einem Zwei-Farben-Druckwerk mit den Druckwerken 90 und 110 sowie dem zentralen Druckzylinder 100 zugeführt. Über das Druckwerk 90 kann eine Farbe aufgebracht und damit die Folie mit einem einfarbigen Druckmotiv bei beliebiger Druckfarbendeckung bedruckt werden, während das Druckwerk 110 den Haftvermittler über die bedruckten Stellen aufbringt. Bei geeigneter Rezeptur ist es ist auch möglich, Druckfarbe und Haftvermittler jeweils gleichzeitig mittels Druckwerk 90 und 110 aufzubringen, was das Aufbringen zweifarbiger Druckmotive ermöglicht. Die Folienbahn wird dann über Walzen und eine Umlenk- und Anpresswalze 130 auf einen Heizzylinder 140 geführt. Weiterhin wird eine Ausgangsvliesbahn 2 über eine Umlenk- und Anpresswalze 120 auf den Heizzylinder 140 geführt Bei dem Heizzylinder 140 oder der Heizwalze 140 handelt es sich z.B. um eine antihaftend beschichtete Stahlwalze, die mittels Wärmezufuhr auf die gewünschte Oberflächentemperatur erhitzt wird. Dort wird erfindungsgemäß erwärmt und die Folienbahn verbindet sich mit der Vliesbahn zu dem Laminat. Das Laminat läuft von der Heizwalze 140 in einen Kühlwalzenspalt, der von den Walzen 150 und 160 gebildet wird. Die Walze 160 ist vorzugsweise als Struktur- oder Prägewalze ausgebildet, wodurch die Folienbahn eine Prägestruktur oder strukturierte Oberfläche erhält. Die Walze 150 ist vorzugsweise eine Gummiwalze. Das Walzenpaar 150/160 ist vorzugsweise wassergekühlt, z.B. mit Wasser von etwa 10 °C. Die den Kühlspalt bildenden Walzen 150 und 160 werden so angetrieben, dass gegenüber der Bahngeschwindigkeit der Heizwalze 140 eine im wesentlichen gleiche Geschwindigkeit besteht. Im Kühlwalzenspalt wird das Laminat schockartig gekühlt und geprägt. Nach dem Walzenpaar 150/160 kann das Laminat direkt abgenommen werden, oder über Umlenkwalzen 170 und 180 einer Ringrolling-Anlage 190, 200 zugeführt werden. Das fertige Laminat kann dann in an sich bekannter Weise weiterverarbeitet werden.

Figur 3 zeigt eine andere Ausführungsform des Verfahrens von Figur 2, bei welchem mit einem Acht-Farben-Druckwerk 90, 100, 110 statt einem Zwei-Farben-Druckwerk 90, 100, 110 die Folie bedruckt wird. In dem in Figur 3 gezeigten Druckwerk können über die Druckwerke 90 sieben Farben und damit ein sieben-farbiges Druckmotiv (bei beliebiger Druckfarbendeckung) sowie der Haftvermittler über das Druckwerk 110 aufgebracht werden. Bei geeigneter Rezeptur ist es ist auch möglich, Druckfarbe und Haftvermittler jeweils gleichzeitig mittels Druckwerk 90 und 110 aufzubringen, was das Aufbringen achtfarbiger Druckmotive ermöglicht. Ansonsten bezeichnen in Figur 2 und Figur 3 gleiche Bezugszeichen das Gleiche.

Die Erfindung ermöglicht die Herstellung dünner bedruckter Vlies-Folien-Laminate mit hohen Druckflächenbedeckungen. Die Laminate können vielfältig verwendet werden. Sie finden Verwendung im Hygiene- oder Medikalbereich, z.B. als Wäscheschutzfolie oder allgemein flüssigkeitsundurchlässige Sperrschicht. Mögliche weitere Verwendungen sind technische Anwendungen, z.B. als Dachunterspannbahn.

## Patentansprüche

1. Verfahren zur Herstellung eines bedruckten Vlies-Folien-Laminats aus einer Ausgangsfolienbahn (1) aus einem thermoplastischen Polymermaterial und einer Ausgangsvliesbahn (2), wobei der Schmelzpunkt der Ausgangsvliesbahn (2) oberhalb des Kristallitschmelzpunkts wenigstens einer Komponente des Polymermaterials der Ausgangsfolienbahn (1) liegt, wobei das Verfahren folgende Schritte umfasst:
- zumindest teilweise Beschichten der Ausgangsfolienbahn (1) mit einer Druckfarbe und mit einem Haftvermittler;
- Erwärmen der beschichteten Folienbahn zusammen mit der Ausgangsvliesbahn (2) auf eine Temperatur, die oberhalb des Kristallitschmelzpunkts der wenigstens einen Komponente des Polymermaterials der Ausgangsfolienbahn (1) und des Haftvermittlers liegt und unterhalb des Kristallitschmelzpunkts der Ausgangsvliesbahn (2) liegt, um ein Laminat zu erhalten; und
- Abkühlen des erhaltenen Laminats durch einen gekühlten Walzenspalt (9, 10, 150, 160), **dadurch gekennzeichnet,**
**dass** eine Druckfarbe, die den Haftvermittler enthält, verwendet wird.

2. Verfahren nach Anspruch 1, **dadurch gekennzeichnet, dass** eine Ausgangsfolienbahn (1) mit 15 bis 85 Gew.-% niedrig schmelzender Polymerkomponente und 85 bis 15 Gew.-% hoch schmelzender Polymerkomponente, bezogen auf 100 Gew.-% niedrig und hoch schmelzende Polymerkomponente, verwendet wird.

3. Verfahren nach Anspruch 1 oder 2, **dadurch gekennzeichnet, dass** eine Ausgangsfolienbahn (1) und Ausgangsvliesbahn (2) mit jeweils wenigstens einem Polyethylen oder jeweils wenigstens einem Polypropylen verwendet werden.

4. Verfahren nach einem der vorhergehenden Ansprüche 1 bis 3, **dadurch gekennzeichnet, dass** die Ausgangsvliesbahn (2) Fasern auf Basis von Polyethylen und/oder Polypropylen enthält.

5. Verfahren nach einem der vorhergehenden Ansprüche 1 bis 4, **dadurch gekennzeichnet, dass** die Ausgangsfolienbahn (1) zu wenigstens 10%, insbesondere zu wenigstens 15%, bevorzugt zu wenigstens 20%, mit der Druckfarbe und mit dem Haftvermittler beschichtet wird.

6. Verfahren nach einem der vorhergehenden Ansprüche 1 bis 5, **dadurch gekennzeichnet, dass** die Druckfarbe Pigmente, Bindemittel und Lösemittel enthält, insbesondere dass die Druckfarbe wasserbasiert oder Ethanol-basiert ist.

7. Verfahren nach einem der vorhergehenden Ansprüche 1 bis 6, **dadurch gekennzeichnet, dass** der Haftvermittler ein thermoplastisches Polymer auf Wasser- oder Lösemittel-Basis umfasst.

8. Verfahren nach Anspruch 7, **dadurch gekennzeichnet, dass** der Haftvermittler Ethylen-Vinylacetat-Copolymer (EVA) oder Polyamid als Polymer umfasst.

9. Verfahren nach einem der vorhergehenden Ansprüche 1 bis 8, **dadurch gekennzeichnet, dass** die Erwärmung auf 5 bis 20 °C unterhalb des Kristallitschmelzpunktes der Ausgangsvliesbahn (2) erfolgt.

10. Verfahren nach einem der vorhergehenden Ansprüche 1 bis 9, **dadurch gekennzeichnet, dass** das Laminat im gekühlten Walzenspalt (9, 10, 150, 160) einer Abkühlung auf wenigstens 10 bis 30 °C unterhalb des Kristallitschmelzpunktes der wenigstens einen Komponente des Polymermaterials der Ausgangsfolienbahn (1) unterworfen wird.

11. Verfahren nach einem der vorhergehenden Ansprüche 1 bis 10, **dadurch gekennzeichnet, dass** eine Ausgangsfolienbahn (1), die 1 bis 75 Gew.-%, insbesondere 50 bis 75 Gew.-% Füllstoff, insbesondere Kreide, enthält, verwendet wird.

12. Verfahren nach einem der vorhergehenden Ansprüche 1 bis 11, **dadurch gekennzeichnet, dass** die Ausgangsfolienbahn (1) in Maschinen- oder Querrichtung oder in Maschinen- und Querrichtung gereckt worden ist.

13. Bedrucktes Vlies-Folien-Laminat, erhältlich durch ein Verfahren nach einem der vorhergehenden Ansprüche 1 bis 12.

14. Bedrucktes Vlies-Folien-Laminat nach Anspruch 13, mit einem Flächengewicht im Bereich von 10 bis 45 g/m², insbesondere von 10 bis 35 g/m², bevorzugt von 10 bis 25 g/m².

15. Verwendung des bedruckten Vlies-Folien-Laminats nach Anspruch 13 oder 14 im Hygiene- oder Medikalbereich, insbesondere für Backsheets in Windeln, für Betteinlagen oder Damenbinden.

## Claims

1. A method for producing a printed nonwoven film laminate from a starting film web (1) of a thermoplastic polymer material and a starting nonwoven web (2), wherein the melting point of the starting nonwoven web (2) is above the crystallite melting point of at least one component of the polymer material of the starting film web (1), the method comprising the following steps:
- at least partially coating the starting film web (1) with a printing ink and with an adhesion promoter;
- heating the coated film web together with the starting nonwoven web (2) to a temperature which is above the crystallite melting point of the at least one component of the polymer material of the starting film web (1) and of the adhesion promoter and below the crystallite melting point of the starting nonwoven web (2), to obtain a laminate; and
- cooling the laminate obtained through a cooled roller nip (9, 10, 150, 160), **characterized in that** a printing ink containing the adhesion promoter is used.

2. The method according to claim 1, **characterized in that** a starting film web (1) with 15 to 85 percent by weight of low melting polymer component and 85 to 15 percent by weight of high melting polymer component, based on 100 percent by weight of low and high melting polymer components, is used.

3. The method according to claim 1 or 2, **characterized in that** a starting film web (1) and a starting nonwoven web (2), each with at least one polyethylene or each with at least one polypropylene, are used.

4. The method according to any of the preceding claims 1 to 3, **characterized in that** the starting nonwoven web (2) contains fibers based on polyethylene and/or polypropylene.

5. The method according to any of the preceding claims 1 to 4, **characterized in that** at least 10%, in particular at least 15%, preferably at least 20%, of the starting film web (1) is coated with the printing ink and with the adhesion promoter.

6. The method according to any of the preceding claims 1 to 5, **characterized in that** the printing ink contains pigments, binders and solvents, in particular **in that** the printing ink is water-based or ethanol-based.

7. The method according to any of the preceding claims 1 to 6, **characterized in that** the adhesion promoter comprises a thermoplastic polymer on water-basis or solvent-basis.

8. The method according to claim 7, **characterized in that** the adhesion promoter comprises an ethylene-vinyl acetate copolymer (EVA) or polyamide as a polymer.

9. The method according to any of the preceding claims 1 to 8, **characterized in that** the heating takes place to 5 to 20 °C below the crystallite melting point of the starting nonwoven web (2).

10. The method according to any of the preceding claims 1 to 9, **characterized in that** the laminate in the cooled roller nip (9, 10, 150, 160) is subjected to cooling to at least 10 to 30 °C below the crystallite melting point of the at least one component of the polymer material of the starting film web (1).

11. The method according to any of the preceding claims 1 to 10, **characterized in that** a starting film web (1) containing 1 to 75 percent by weight, in particular 50 to 75 percent by weight, of filler, in particular of chalk, is used.

12. The method according to any of the preceding claims 1 to 11, **characterized in that** the starting film web (1) has been stretched in machine or cross direction or both in machine and cross direction.

13. A printed nonwoven film laminate, obtainable by a process according to any of the preceding claims 1 to 12.

14. The printed nonwoven film laminate according to claim 13, having a basis weight in the range of from 10 to 45 g/m², in particular of from 10 to 35 g/m², preferably of from 10 to 25 g/m².

15. Use of the printed nonwoven film laminate according to claim 13 or 14 in the hygiene or medical field, in particular for backsheets in diapers, for bed pads or sanitary napkins.

## Revendications

1. Procédé de fabrication d'un stratifié imprimé non tissé en feuille à partir d'une feuille continue de départ (1) en un matériau polymère thermoplastique et d'une nappe non tissée de départ (2), le point de fusion de la nappe non tissée de départ (2) étant supérieur au point de fusion des cristallites d'au moins un composant du matériau polymère de la feuille continue de départ (1), le procédé comprenant les étapes suivantes :
- revêtement au moins partiel de la feuille continue de départ (1) avec une encre d'imprimerie et un promoteur d'adhérence ;
- chauffage de la feuille continue revêtue, conjointement à la nappe non tissée de départ (2), à une température qui est supérieure au point de fusion des cristallites de l'au moins un composant du matériau polymère de la feuille continue de départ (1) et du promoteur d'adhérence, et est inférieure au point de fusion des cristallites de la nappe non tissée de départ (2), pour donner un stratifié ; et
- refroidissement du stratifié obtenu en le faisant passer dans un espace refroidi entre cylindres (9, 10, 150, 160), **caractérisé en ce que**
l'on utilise une encre d'imprimerie qui contient le promoteur d'adhérence.

2. Procédé selon la revendication 1, **caractérisé en ce que** l'on utilise une feuille continue de départ (1) comportant 15 à 85 % en poids d'un composant polymère à bas point de fusion et 85 à 15 % en poids d'un composant polymère à haut point de fusion, pour 100 parties en poids de la somme des composants polymères à bas point de fusion et à haut point de fusion.

3. Procédé selon la revendication 1 ou 2, **caractérisé en ce que** l'on utilise une feuille continue de départ (1) et une nappe non tissée de départ (2) dont chacune comporte au moins un polyéthylène ou au moins un polypropylène.

4. Procédé selon l'une des revendications 1 à 3 précédentes, **caractérisé en ce que** la nappe non tissée de départ (2) contient des fibres à base de polyéthylène et/ou de polypropylène.

5. Procédé selon l'une des revendications 1 à 4 précédentes, **caractérisé en ce que** la feuille continue de départ (1) est revêtue de l'encre d'imprimerie et du promoteur d'adhérence à raison d'au moins 10 %, en particulier d'au moins 15 %, de préférence d'au moins 20 %.

6. Procédé selon l'une des revendications 1 à 5 précédentes, **caractérisé en ce que** l'encre d'imprimerie contient des pigments, des liants et des solvants, en particulier **en ce que** l'encre d'imprimerie est à base d'eau ou à base d'éthanol.

7. Procédé selon l'une des revendications précédentes 1 à 6, **caractérisé en ce que** le promoteur d'adhérence comprend un polymère thermoplastique à base d'eau ou de solvant.

8. Procédé selon la revendication 7, **caractérisé en ce que** le promoteur d'adhérence comprend un copolymère éthylène-acétate de vinyle (EVA) ou du polyamide en tant que polymère.

9. Procédé selon l'une des revendications 1 à 8 précédentes, **caractérisé en ce que** le chauffage a lieu à 5 à 20 °C en-dessous du point de fusion des cristallites de la nappe non tissée de départ (2).

10. Procédé selon l'une des revendications 1 à 9 précédentes, **caractérisé en ce que**, dans l'espace refroidi entre les cylindres (9, 10, 150, 160), le stratifié est soumis à un refroidissement à au moins 10 à 30 °C en-dessous du point de fusion des cristallites de l'au moins un composant du matériau polymère de la feuille continue de départ (1).

11. Procédé selon l'une des revendications 1 à 10 précédentes, **caractérisé en ce que** l'on utilise une feuille continue de départ (1) qui contient 1 à 75 % en poids, en particulier 50 à 75 % en poids de charge, en particulier de craie.

12. Procédé selon l'une des revendications 1 à 11 précédentes, **caractérisé en ce que** la feuille continue de départ (1) a été étirée dans le sens machine ou dans le sens travers, ou dans le sens machine et dans le sens travers.

13. Stratifié imprimé non tissé en feuille pouvant être obtenu par un procédé selon l'une des revendications 1 à 12 précédentes.

14. Stratifié imprimé non tissé en feuille selon la revendication 13, présentant une masse surfacique comprise dans la plage de 10 à 45 g/m², en particulier de 10 à 35 g/m², de préférence de 10 à 25 g/m².

15. Utilisation du stratifié imprimé non tissé en feuille selon la revendication 13 ou 14 dans le domaine de l'hygiène ou le domaine médical, en particulier pour les feuilles dorsales des couches pour bébé, pour les alèses ou pour les serviettes hygiéniques.
